# DEMANDE DE BREVET EUROPEEN

(11) **EP 1 927 452 A1**
(43) Date de publication de la demande: **04.06.2008**
(21) Numéro de dépôt: 07356172.2
(22) Date de dépôt: 30.11.2007
(51) Int. Cl.: B29C 45/00, B29C 45/16, A45D 40/00

(54) **Procédé de réalisation de pots massifs par injection de matières plastiques**

(30) Priorité: 01.12.2006 FR 0610517
(71) Demandeur: Mino Gaillard SNDG, 01580 Izernore (FR)
(72) Inventeur: Goillon, Jean-Pierre, 01100 Veyziat/Oyonnax (FR)
(74) Mandataire: Bratel, Gérard

(57) **Abrégé**

L'invention concerne la réalisation de pots à paroi épaisse et autres contenants analogues, de forme extérieure cylindrique ou non cylindrique, par injection de matières plastiques.

On procède à une injection multicouches, avec injections successives d'une couche de matière intérieure (3), d'au moins une couche de matière intermédiaire (6) et d'une couche de matière extérieure (7), ce qui évite les défauts d'aspect et le phénomène de fissuration.

Application à la fabrication de pots à paroi épaisse pour produits cosmétiques, notamment des pots transparents ou translucides.

## Description

La présente invention concerne un procédé de réalisation de pièces à paroi épaisse, plus particulièrement de pièces en forme de pots, par injection de matières plastiques.

Ainsi, l'invention s'intéresse au domaine de la fabrication de pots et autres contenants analogues, à parois épaisses, tels que notamment les pots destinés à contenir des produits cosmétiques.

Il est connu de réaliser des pots massifs par un procédé de mono-injection, notamment dans les matières synthétiques suivantes :
- styrène acrylonitrile (SAN)
- poly méthacrylate de méthyle (PMMA) ;
- copolymère acrylique cristal commercialisé sous la dénomination NAS (marque enregistrée).
Pour des raisons de résistance à la fissuration, on a également été déjà amené à réaliser ce genre de pièces en copolymère de polyéthylène téréphtalate de glycol (PCTG), car cette matière possède une tenue bien supérieure aux matières précédemment nommées. Cependant, le coût d'une telle fabrication est fortement supérieur.

Le procédé de moulage habituel, du genre mono-injection, permet de réaliser principalement des pièces massives de forme cylindrique, car le retrait de la matière à l'intérieur de telles pièces s'effectue de façon relativement uniforme, ce qui permet de le dissimuler et de le rendre quasiment invisible à l'oeil.

Toutefois, dans le cas de pièces massives de formes autres que cylindrique, par exemple des pots de section horizontale sensiblement carrée ou ovale, le procédé actuel de mono-injection ne permet pas de réaliser ces pièces sans retassures intérieures et avec la même qualité que les pièces cylindriques. En particulier, les pièces alors obtenues présentent des défauts d'aspect dus à un retrait interne non uniforme, et elles sont sujettes à des phénomènes de dégradation tels que fissuration ou fendillement, ou même éclatement. Ces défauts sont encore accentués par le caractère actuellement de plus en plus agressif des crèmes cosmétiques actives contenues dans les pots concernés.

Certes, il est déjà connu de mouler des objets du genre pots avec deux couches successives, par exemple pour constituer un revêtement de surface notamment à rôle décoratif, ou pour former des motifs ou des inscriptions d'une couleur particulière, visibles à la surface du pot.

En ce qui concerne la formation d'un revêtement de surface, notamment décoratif, pour des pots, il est fait référence aux documents de brevets US 2004/021245 et EP 0935419 cités ici à titre d'exemples. Peut aussi être cité le document US 2076551, prévoyant pour un pot la formation d'une coque intérieure. Comme on le comprend facilement, le revêtement extérieur ou la coque intérieure ne représente dans ces cas qu'une faible fraction de l'épaisseur totale de la paroi du pot, et cette paroi reste donc formée, pour l'essentiel de son épaisseur, par une unique matière moulée en une seule opération, de sorte que les problèmes précédemment évoqués ne sont pas résolus.

Dans le cas du brevet FR 2580983, deux couches sont imbriquées pour former des motifs ou inscriptions colorés, à la surface du pot. Par définition même du procédé de ce document, les deux couches sont réalisées en matières plastiques de couleurs différentes. Ce procédé n'a pas de signification pour des pots réalisés dans une seule matière et sans effets de contraste de couleurs, notamment des pots transparents ou translucides.

Par ailleurs, on connaît des procédés de réalisation de pots ou autres objets avec deux ou plusieurs couches en matière distinctes et très spécifiques, qui sont solidarisées par l'effet de certaines réactions chimiques - voir les documents de brevets JP 06-181812 et JP 2007-181872. Ce genre de procédé nécessite des matières spéciales coûteuses, sa mise en oeuvre est délicate, et là aussi le procédé n'a pas de sens pour des pots réalisés dans une seule et même matière.

La présente invention vise à éviter ces inconvénients, et elle a donc pour but de fournir un procédé amélioré pour la réalisation de pots massifs et autres pièces analogues en matière plastique, notamment des pots transparents et translucides, ce procédé étant applicable à des pièces massives de forme cylindrique ou non cylindrique sans qu'il en résulte un aspect irrégulier ni une diminution de la tenue mécanique des pièces obtenues, le procédé étant en outre économique et permettant des cadences de production élevées.

A cet effet, l'invention a pour objet un procédé de réalisation de pots à paroi épaisse et autres contenants analogues, possédant une forme extérieure cylindrique ou non cylindrique, par injection de matière(s) plastique(s), procédé qui consiste essentiellement en une injection multicouches avec injections successives d'une couche de matière intérieure, d'au moins une couche de matière intermédiaire qui sera noyée dans l'épaisseur de la pièce finale, et d'une couche de matière extérieure, chaque couche de matière plastique correspondant à une fraction substantielle de l'épaisseur totale de la pièce finale.

Ainsi, le procédé de l'invention consiste à réaliser des pièces épaisses par une succession d'injections de couches de matière plastique, en partant de l'intérieur des pièces à mouler, chaque couche de matière plastique correspondant à une fraction appréciable de l'épaisseur totale de la pièce finale. En effet on a pu constater, de façon surprenante, qu'un tel procédé d'injection multicouches permet d'obtenir des pièces d'une tenue parfaite, et sans défaut d'aspect, même dans le cas de pièces du genre pot de forme non cylindrique et de structure massive, avec des épaisseurs de matière importantes, pouvant atteindre 12 à 15 millimètres, ou plus.

Cet effet surprenant a été confirmé par des essais comparatifs effectués par le Demandeur, des pots réalisés par le procédé classique de mono-injection ayant lors de ces tests donné lieu à un éclatement rapide, au bout d'une seule journée, alors que des pots de même forme réalisés par le procédé d'injection multicouches selon l'invention n'ont subi aucune modification au bout de quinze jours.

Le procédé de l'invention est, en particulier, utilisable pour la fabrication de pots transparents ou translucides, à paroi épaisse, notamment destinés à contenir des produits cosmétiques. Dans ce cas, les couches successivement moulées se "fondent" entre elles, ne laissant finalement visible aucune limite entre ces couches, de sorte que les pots obtenus imitent parfaitement l'aspect visuel de pots en verre épais (et en possèdent aussi les qualités mécaniques et chimiques).

La réalisation de pots massifs en plusieurs couches, par mise en oeuvre du procédé selon l'invention, permet aussi une fabrication de tels pots avec une succession de matières différentes, par exemple une couche intérieure en une matière résistante à l'attaque du produit contenu dans le pot, une couche extérieure résistante aux agressions du milieu ambiant, et le cas échéant une couche intermédiaire colorée, pouvant procurer des effets décoratifs particuliers.

Dans un processus industriel, le procédé d'injection multicouches de l'invention est avantageusement mis en oeuvre dans un outillage rotatif, utilisant une partie tournante de moule possédant plusieurs positions angulaires indexées, à chaque position correspondant l'injection de l'une des couches de matière. Ainsi, quel que soit le nombre de ces couches de matière, le rendement de production des pièces ne se trouve nullement réduit.

Dans l'ensemble, le procédé de l'invention permet ainsi de répondre simultanément aux exigences de qualité et de productivité, pour des pièces de forme massive du genre ici considéré.

L'invention sera mieux comprise à l'aide de la description qui suit, en référence au dessin schématique annexé illustrant, à titre d'exemple, le mode opératoire suivi pour un pot massif de forme particulière :
Figure 1 est une vue en coupe passant par l'axe d'un pot en cours de réalisation, dans une première phase du procédé ;
Figure 2 est une autre vue en coupe suivant 11-11 de figure 1 illustrant cette première phase ;
Figure 3 est une vue en perspective correspondant aux figures 1 et 2 ;
Figure 4 est une vue en coupe similaire à la figure 1, dans une deuxième phase du procédé ;
Figure 5 est une autre vue en coupe suivant V-V de figure 4 illustrant cette deuxième phase ;
Figure 6 est une vue en perspective correspondant aux figures 4 et 5;
Figure 7 est une vue en coupe similaire aux figures 1 et 4, dans une troisième phase du procédé ;
Figure 8 est une autre vue en coupe suivant VIII-VIII de figure 7 illustrant cette troisième phase ;
Figure 9 est une vue en perspective correspondant aux figures 7 et 8, et montrant ainsi le pot moulé dans son état final ;
Figure 10 illustre, très schématiquement, l'outillage de fabrication d'un tel pot, mettant en oeuvre le procédé de l'invention.

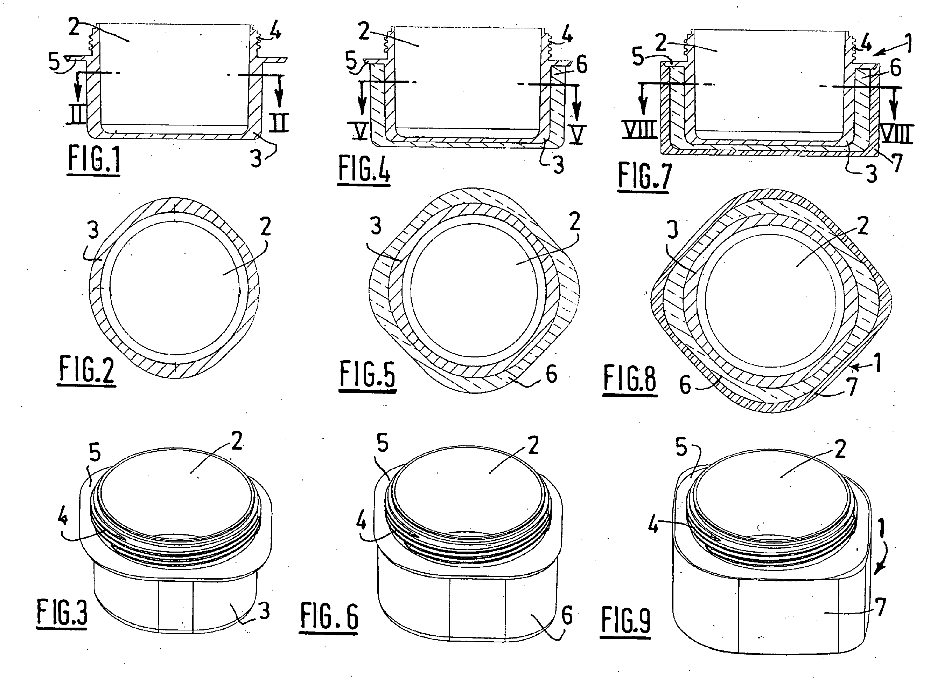

Le dessin annexé, en particulier les figures 1 à 9, illustrent la fabrication d'un pot 1 à paroi épaisse, prévu pour recevoir un bouchon ou couvercle vissé (non représenté). Le pot 1 possède ici une cavité intérieure cylindrique 2 et une forme extérieure non cylindrique, la section horizontale 1 du pot étant carrée avec quatre angles arrondis. Un tel pot possède ainsi une paroi latérale d'épaisseur non constante.

Une première étape de fabrication illustrée par les figures 1, 2 et 3 consiste dans le moulage par injection d'une couche intérieure 3, qui délimite la cavité cylindrique 2 et qui, dans la future partie supérieure du pot, forme un filetage 4 prévu pour recevoir le bouchon ou couvercle vissé, et forme aussi une collerette 5 située à la base du filetage 4.

Une deuxième étape de fabrication illustrée par les figures 4, 5 et 6 consiste dans le moulage par injection d'une couche intermédiaire 6, qui recouvre entièrement le fond du futur pot ainsi que sa paroi latérale, en adhérant à la couche intérieure 3, jusqu'au niveau de la collerette 5.

Une troisième étape de fabrication illustrée par les figures 7, 8 et 9 consiste dans le moulage par injection d'une couche extérieure 7 qui elle-même recouvre entièrement la couche intermédiaire 6, en étant présente sur le fond et la paroi latérale du pot. Après injection de la couche extérieure 7, on obtient le pot 1 dans son état final, tel que représenté sur la figure 9.

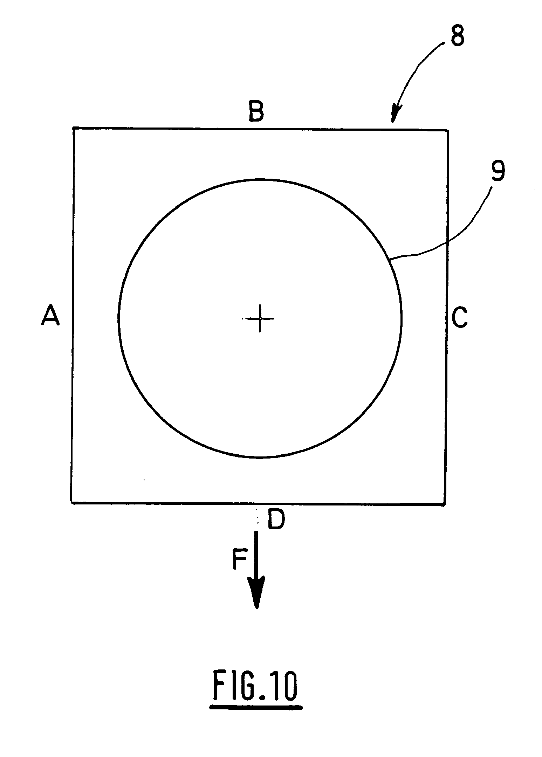

En se référant à la figure 10, on indique ici le principe d'un outillage de moulage par injection, désigné globalement par 8, qui permet la réalisation des trois phases d'injection précédemment décrites. L'outillage 8 possède une partie tournante 9, qui peut-être arrêtée en rotation dans quatre positions angulaires indexées A, B, C et D, séparées les unes des autres par des rotation élémentaires de 90 ° :
- la position A correspond à l'injection de la couche intérieure 3 ;
- la position B correspond à l'injection de la couche intermédiaire 6 ;
- la position C correspond à l'injection de la couche extérieure 7 ;
- la position D correspond à l'éjection, symbolisée par une flèche

F, du pot 1 entièrement moulé.

Bien entendu, cet outillage 8 peut comporter des empreintes multiples, pour la réalisation simultanée de plusieurs pots identiques et en particulier, l'injection simultanée de chaque couche de matière pour tout ce groupe de pots. De plus, l'injection de la couche intermédiaire d'un groupe de pots est simultanée à l'injection de la couche intérieure du groupe de pots suivants, et à l'injection de la couche extérieure du groupe de pots précédent. Une grande productivité est ainsi obtenue.

Dans le cas où les trois couches 3, 6 et 7 sont de la même matière, ces couches se fondent finalement les unes aux autres et le pot 1 obtenu apparaît homogène, sans limite visible entre ces couches même s'il s'agit d'un pot transparent ou translucide. Les couches successives 3, 6 et 7 peuvent aussi être réalisées dans des matières différentes les unes des autres par leur nature, leurs propriétés et/ou leur aspect, par exemple avec une couche intermédiaire 6 colorée, visible au travers des couches intérieure 3 et extérieure 7 transparentes.

L'on ne s'éloignerait pas du cadre de l'invention, telle que définie dans les revendications annexées :
- en formant les pièces avec des couches de matière plus ou moins nombreuses, successivement injectées, le nombre de couches étant notamment fonction de l'épaisseur de paroi finale à obtenir ;
- en mettant en oeuvre le procédé avec toutes matières moulables, les couches successives étant injectées soit dans la même matière, soit dans des matières différentes ;
- en destinant le procédé à la fabrication de pots de toutes formes, ou d'autres contenants et pièces analogues, en particulier des pièces massives de forme cylindrique ou non cylindrique.

## Revendications

1. Procédé de réalisation de pots (1) à paroi épaisse et autres contenants analogues, possédant une forme extérieure cylindrique ou non cylindrique, par injection de matière(s) plastique(s), **caractérisé en ce qu'**il consiste en une injection multicouches avec injections successives d'une couche de matière intérieure (3), d'au moins une couche de matière intermédiaire (6) qui sera noyée dans l'épaisseur de la pièce finale, et d'une couche de matière extérieure (7), chaque couche de matière plastique correspondant à une fraction substantielle de l'épaisseur de la pièce finale.

2. Procédé de selon la revendication 1, **caractérisé en ce que** les couches (3, 6, 7) successivement injectées sont toutes de la même matière.

3. Procédé selon la revendication 1, **caractérisé en ce que** les couches (3, 6, 7) successivement injectées sont de matières différentes.

4. Procédé selon l'une des revendications 1 à 3, **caractérisé en ce qu'**il est mis en oeuvre dans un outillage rotatif (8), utilisant une partie tournante (9) de moule possédant plusieurs positions angulaires indexées (A, B, C), à chaque position correspondant l'injection de l'une des couches de matière (3, 6, 7).

5. Utilisation du procédé selon l'une des revendications 1 à 4, pour la fabrication de pots (1) transparents ou translucides, à paroi épaisse., notamment destinés à contenir des produits cosmétiques.
